(19) Europäisches Patentamt European Patent Office Office européen des brevets

(11) **EP 3 505 865 B1**

(12) **EUROPEAN PATENT SPECIFICATION**

(45) Date of publication and mention of the grant of the patent:
**09.03.2022 Bulletin 2022/10**

(21) Application number: **17845963.2**

(22) Date of filing: **26.07.2017**

(51) International Patent Classification (IPC):
$G01C\ 3/00^{(2006.01)}$    $G01B\ 11/00^{(2006.01)}$
$G01C\ 3/06^{(2006.01)}$    $H04N\ 5/225^{(2006.01)}$
$H04N\ 5/232^{(2006.01)}$    $H04N\ 17/00^{(2006.01)}$
$G01C\ 3/08^{(2006.01)}$    $G01C\ 11/06^{(2006.01)}$
$G06T\ 7/80^{(2017.01)}$    $G01C\ 11/08^{(2006.01)}$
$G06T\ 5/00^{(2006.01)}$

(52) Cooperative Patent Classification (CPC):
**G01B 11/00; G01C 3/08; G01C 11/08; G06T 5/006; G06T 7/85; H04N 5/225; H04N 5/23212; H04N 17/00;** G06T 2207/10012; G06T 2207/30252

(86) International application number:
**PCT/JP2017/026977**

(87) International publication number:
**WO 2018/042954 (08.03.2018 Gazette 2018/10)**

(54) **ON-VEHICLE CAMERA, METHOD FOR ADJUSTING ON-VEHICLE CAMERA, AND ON-VEHICLE CAMERA SYSTEM**

FAHRZEUGINTERNE KAMERA, VERFAHREN ZUR EINSTELLUNG DER FAHRZEUGINTERNEN KAMERA UND FAHRZEUGINTERNES KAMERASYSTEM

CAMÉRA EMBARQUÉE, PROCÉDÉ DE RÉGLAGE DE CAMÉRA EMBARQUÉE, ET SYSTÈME DE CAMÉRA EMBARQUÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.08.2016 JP 2016167040**

(43) Date of publication of application:
**03.07.2019 Bulletin 2019/27**

(73) Proprietor: **Hitachi Astemo, Ltd. Hitachinaka-shi, Ibaraki 312-8503 (JP)**

(72) Inventors:
• **NAGASAKI, Takeshi**
  **Hitachinaka-shi, Ibaraki 312-8503 (JP)**
• **MOIZUMI, Hiroki**
  **Hitachinaka-shi, Ibaraki 312-8503 (JP)**
• **AOKI, Toshiyuki**
  **Tokyo 100-8280 (JP)**
• **TADA, Naoya**
  **Hitachinaka-shi, Ibaraki 312-8503 (JP)**
• **MATONO, Haruki**
  **Hitachinaka-shi, Ibaraki 312-8503 (JP)**

(74) Representative: **MERH-IP Matias Erny Reichl Hoffmann Patentanwälte PartG mbB Paul-Heyse-Strasse 29 80336 München (DE)**

(56) References cited:
EP-A1- 2 902 967    WO-A1-2015/133414
DE-A1-102010 000 745    DE-A1-102014 219 423
JP-A- 2004 132 870    JP-A- 2010 160 051
JP-A- 2015 163 866    JP-A- 2015 169 583

EP 3 505 865 B1

**Description**

Technical Field

The present invention relates to an on-vehicle camera, a method for adjusting the on-vehicle camera, and an on-vehicle camera system.

Background Art

In the related art, inventions relating to a calibration method, a calibration device, and a program of an on-vehicle camera are known (for example, see the following PTL 1). The calibration method described in PTL 1 includes: a step of photographing a subject not via a transparent body to acquire a first photograph image; a step of photographing the subject via the transparent body to acquire a second photograph image; a step of, on the basis of a coordinate of an image of the subject of the first photograph image and a coordinate of an image of the subject of the second photograph image, calculating an absolute position deviation indicative of a deviation of the coordinates of the images of the subject caused by the transparent body; a step of calculating a correction parameter for calibration of the absolute position deviation; and a step of storing the correction parameter in an imaging device (see Claim 1, etc. of PTL 1).

Moreover, another invention relating to a calibration method, a calibration device, a measuring instrument, and a program of an on-vehicle camera are also known (see, for example, PTL 2 below). The calibration method described in PTL 2 includes a step of measuring relative positions of a subject installed within a photographic range of a stereo camera and the stereo camera, a step of acquiring a photographed image including the subject photographed by the stereo camera, and a step of determining a calibration parameter for calibration of the stereo camera on the basis of the relative positions and the photographed image. Eventually, PTL 3 discloses inter alia a stereo camera calibration method, a disparity calculating device, and a stereo camera.

Citation List

Patent Literature

PTL 1: JP 2015-169583 A

PTL 2: JP 2016-006406 A

PTL 3: EP 2 902 967 A1

Summary of Invention

Technical Problem

The invention described in PTL 1 has a problem that it is necessary to photograph the subject after removing the transparent body such as a glass shield of a vehicle, for example. Furthermore, the invention described in PTL 2 has a problem that a laser range finder is required in the step of measuring the relative positions between the subject and the stereo camera.

The present invention has been made in view of the above problems, and it is an object of the present invention to provide an on-vehicle camera capable of reducing the distance measurement error caused by a glass shield without requiring the glass shield to be removed nor using another distance measurement device, and a method for adjusting the on-vehicle camera and an on-vehicle camera system.

Solution to Problem

In order to achieve the above object, an on-vehicle camera having the features of independent claim 1 and an on-vehicle system having the features of claim 3 are provided. Preferred embodiments are described in the dependent claim. In particular, an on-vehicle camera of the present invention is an on-vehicle camera for photographing an object through a glass shield of a vehicle, the on-vehicle camera including: a pair of imaging elements; and an error information storage unit for storing error information related to an error caused by the glass shield, the error included in a difference in image-forming positions of the object between pixel positions of the pair of imaging elements for each of the pixel positions.

Advantageous Effects of Invention

According to the present invention, by photographing a known object through the glass shield of the vehicle, error information related to the error caused by the glass shield can be detected and stored in the error information storage unit for each of the pixel positions on the basis of the information related to the image-forming positions of the known object between pixel positions of the imaging elements. Moreover, using this error information allows the differences in the image-forming positions of the object between the pixel positions of the pair of imaging elements to be corrected. Therefore, according to the present invention, the distance measurement error caused by a glass shield can be reduced without requiring the glass shield to be removed nor using another distance measurement device.

Brief Description of Drawings

[FIG. 1] FIG. 1 is a block diagram illustrating a configuration of an on-vehicle camera according to an embodiment of the present invention.
[FIG. 2A] FIG. 2A is a graph illustrating the difference in image-forming position of an object.
[FIG. 2B] FIG. 2B is a graph illustrating an example of error information stored in an error information storage unit.
[FIG. 2C] FIG. 2C is a graph illustrating an example of parallax information stored in a parallax information storage unit.
[FIG. 3] FIG. 3 is a flowchart illustrating an example of processing of the on-vehicle camera illustrated in FIG. 1.
[FIG. 4] FIG. 4 is a flowchart of a method for adjusting an on-vehicle camera according to an embodiment of the present invention.
[FIG. 5] FIG. 5 is a flowchart illustrating details of an imaging step illustrated in FIG. 4.
[FIG. 6] FIG. 6 is a diagram illustrating an example of a pattern of a calibration chart.
[FIG. 7A] FIG. 7A is a plan view illustrating an example of an installation error of the calibration chart.
[FIG. 7B] FIG. 7B is a diagram of an image illustrating an example of a monocular image of a stereo camera affected by the installation error.
[FIG. 7C] FIG. 7C is a diagram of an image illustrating an example of a monocular image of the stereo camera affected by the installation error.
[FIG. 8] FIG. 8 is a conceptual diagram illustrating a calculation principle of an installation distance based on dimensions of a frame of the calibration chart.
[FIG. 9] FIG. 9 is a schematic diagram illustrating images formed by a pair of imaging elements having photographed the calibration chart.
[FIG. 10] FIG. 10 is a conceptual diagram illustrating the correction principle of errors caused by a glass shield.
[FIG. 11] FIG. 11 is an exemplary graph illustrating the parallax obtained in an error detection step.
[FIG. 12] FIG. 12 is a conceptual diagram illustrating the correction principle in consideration of an installation error of the calibration chart.
[FIG. 13] FIG. 13 is a graph illustrating an example of the correction amount of the distance calculated in a correction amount calculating step.
[FIG. 14] FIG. 14 is a block diagram illustrating a configuration of an on-vehicle camera system according to an embodiment of the present invention.

Description of Embodiments

Hereinafter, embodiments of an on-vehicle camera, a method for adjusting the on-vehicle camera, and an on-vehicle camera system of the present invention will be described with reference to the drawings.

[On-Vehicle Camera]

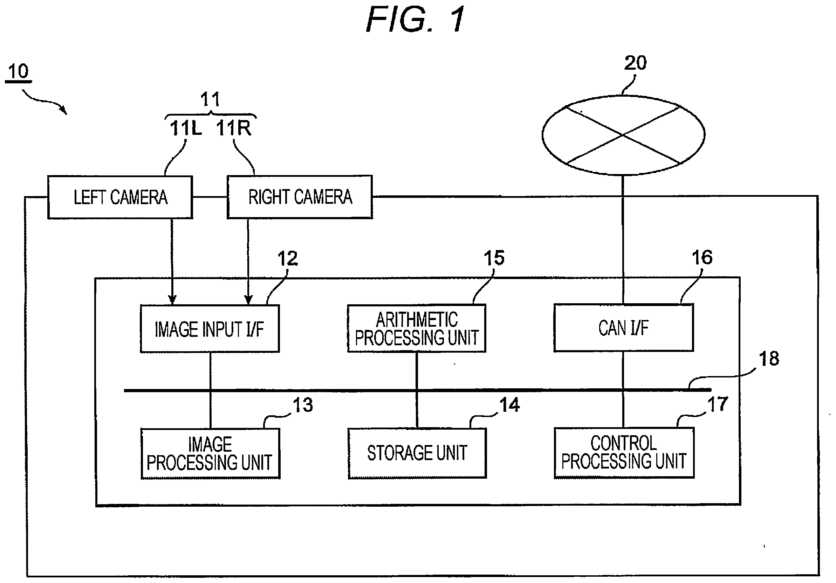

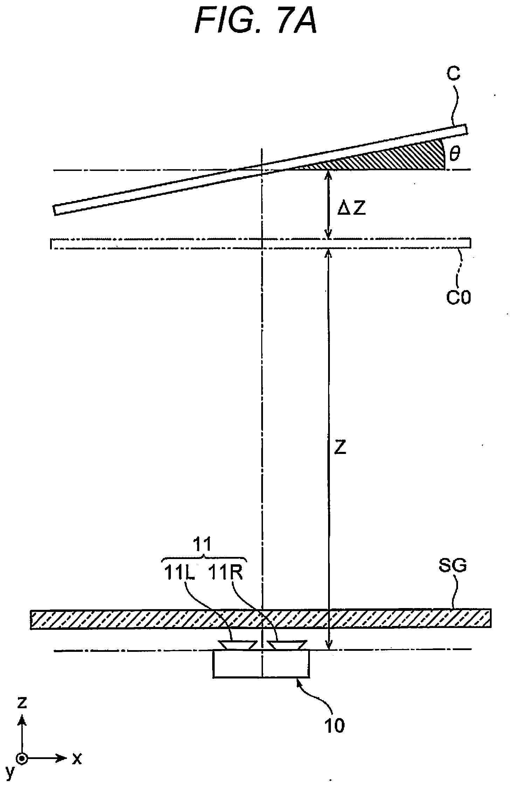

FIG. 1 is a block diagram illustrating a configuration of an on-vehicle camera 10 according to an embodiment of the present invention.
The on-vehicle camera 10 according to the present embodiment is a stereo camera device for acquiring visual image information and distance information of various objects around a vehicle including pedestrians, surrounding vehicles, white lines and road surfaces of roads, three-dimensional objects such as signs and buildings. That is, the on-vehicle camera 10 of the present embodiment is a device that is mounted in a vehicle and recognizes the environment outside the vehicle on the basis of image information of an imaging target area ahead the vehicle. The on-vehicle camera 10 photographs an object to be measured through a glass shield SG (see FIG. 7A) of the vehicle to grasp details of the object to be measured, and thereby for example contributing to improvement of safety during driving support.

The on-vehicle camera 10 includes, for example, a stereo camera 11, an image input interface 12, an image processing unit 13, a storage unit 14, an arithmetic processing unit 15, a controller area network (CAN) interface 16, and a control processing unit 17. The stereo camera 11 has a pair of cameras, a left camera 11L and a right camera 11R. Although not illustrated in the drawing, the left camera 11L and the right camera 11R each include a lens and an imaging element such as a charge coupled device (CCD) and a complementary metal oxide semiconductor (CMOS).

The image input interface 12, the image processing unit 13, the storage unit 14, the arithmetic processing unit 15, the CAN interface 16, and the control processing unit 17 are implemented by, for example, a single or a plurality of computer units including an arithmetic device such as a central processing unit (CPU), a storage device such as a memory, programs, etc. These units are mutually connected via a bus 18, for example.

The image input interface 12 is for controlling the stereo camera 11 and fetching photographed images. The image input interface 12 is connected to the image processing unit 13, the arithmetic processing unit 15, the storage unit 14, the CAN interface 16, the control processing unit 17, and other components via the bus 18 and also functions as an input/output unit of the stereo camera 11.

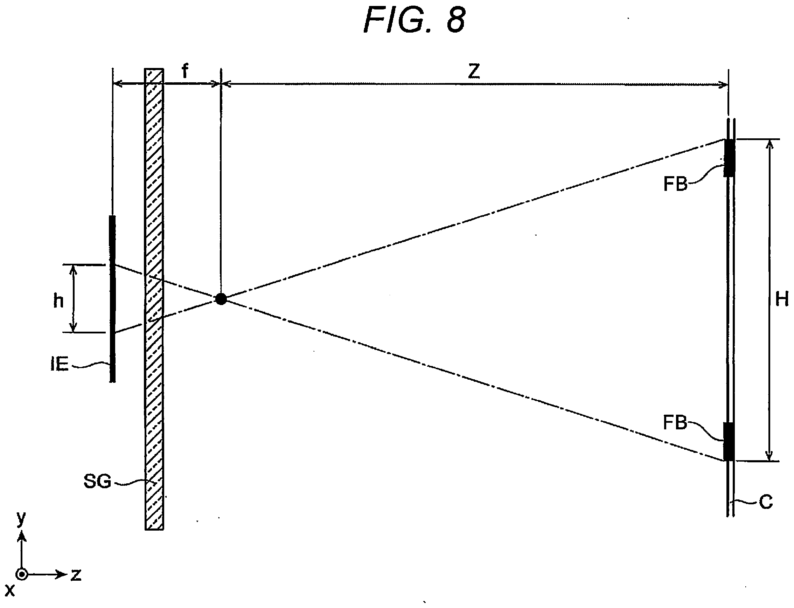

The image processing unit 13 processes images of the stereo camera 11 fetched via the image input interface 12 and the bus 18. The image processing unit 13 compares a left image obtained from an imaging element IE of the left camera 11L and a right image obtained from an imaging element IE of the right camera 11R and performs, on each of the images, correction of deviation unique to the device attributable to the imaging element IE or image correction such as noise interpolation (see FIGS. 8 to 10).

Moreover, the image processing unit 13 compares the left image obtained from the imaging element IE of the left camera 11L and the right image obtained from the imaging element IE of the right camera 11R and obtains differences in image-forming positions of the object between pixel positions of the pair of imaging elements IE. Data under processing or processed data by the image processing unit 13 are stored in the storage unit 14 via the bus 18, for example.

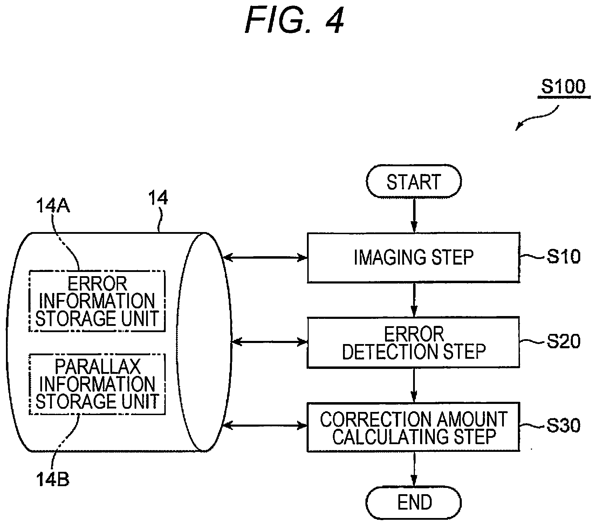

The differences in image-forming positions of the object between the pixel positions of the pair of imaging elements IE include not only the parallax caused by the distance between the pair of imaging elements IE, that is, relative positions, but also the error of the image-forming positions of the object caused by the shape of the glass shield SG. Details will be described later. The image processing unit 13 calculates error information related to the error of the image-forming positions caused by the glass shield SG. The error information is stored in the error information storage unit 14A (see FIG. 4) to be described later for each of the pixel positions of the imaging elements IE.

The arithmetic processing unit 15 uses parallax information related to the parallax caused by the distance between the pair of the imaging elements IE of the left camera 11L and the right camera 11R stored in the storage unit 14, for example, to measure the distance to the object to be measured and to recognize the object to be measured, thereby perceiving the environment around the vehicle. For recognition of the object by the arithmetic processing unit 15, a pre-stored recognition dictionary can be used as necessary.

Data under processing or processed data by the arithmetic processing unit 15 are stored in the storage unit 14 via the bus 18, for example. After recognition of the object from the images photographed by the pair of imaging elements IE, the arithmetic processing unit 15 can also calculate the control amount of the vehicle using these images. The object, that is, the object to be measured may be, for example, a pedestrian, a surrounding vehicle, a tail lamp of a preceding vehicle, a head light of an oncoming vehicle, a traffic light, a sign, or other obstacles.

The storage unit 14 includes an error information storage unit 14A for storing error information for each of the pixel positions of the pair of imaging elements IE and a parallax information storage unit 14B for storing parallax information of the pair of imaging elements IE (see FIG. 4). The storage unit 14 further stores recognition results of objects by the arithmetic processing unit 15 and other data.

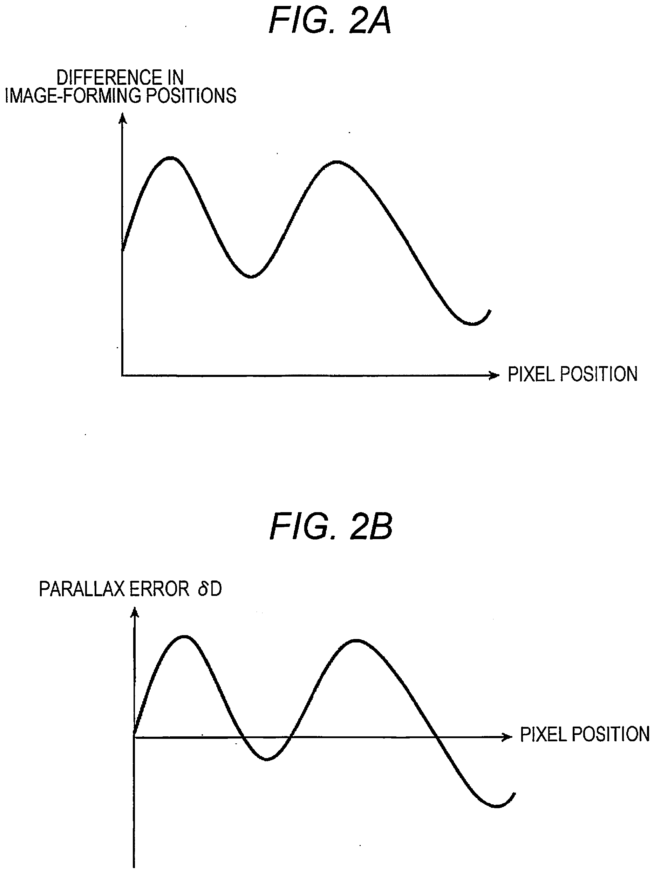

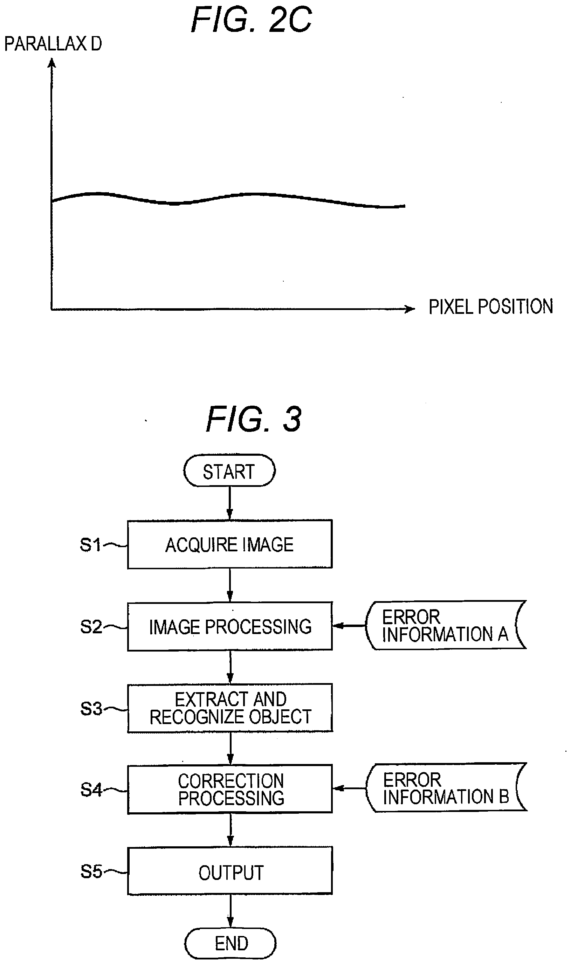

FIG. 2A is a graph illustrating the differences in image-forming positions of an object between the pixel positions of the pair of imaging elements IE of the stereo camera 11. FIG. 2B is a graph illustrating an example of error information stored in the error information storage unit 14A. FIG. 2C is a graph illustrating an example of parallax information stored in the parallax information storage unit 14B. In FIGS. 2A, 2B, and 2C, the difference in image-forming positions, the parallax error $\delta D$, and the parallax D, respectively, are illustrated for each of the pixel positions of the imaging elements IE in the horizontal direction (x axis direction) parallel to a baseline length of the stereo camera 11.

The error information may include the parallax error $\delta D$ illustrated in FIG. 2B as the correction amount. The parallax error $\delta D$ is the difference in image-forming positions of the object caused by the glass shield SG, such as refraction, at the pixel positions of the pair of imaging elements IE. The parallax error $\delta D$ illustrated in FIG. 2B is included in the difference in the image-forming positions of the object between the pixel positions of the pair of imaging elements IE illustrated in FIG. 2A.

The parallax error $\delta D$ illustrated in FIG. 2B is a difference $\delta_L - \delta_R$ obtained by subtracting the amount of shift $\delta_R$ caused by the glass shield SG at an image-forming position of the object at a pixel position of the imaging element IE of the right camera 11R from the amount of shift $\delta_L$ caused by the glass shield SG at an image-forming position of the object at a pixel position of the imaging element IE of the left camera 11L. The error information including the parallax error δD can be obtained by, for example, an adjustment method S100 of an on-vehicle camera which will be described later, and is stored in the error information storage unit 14A for each of the pixel positions of the imaging elements IE.

The error information may include error information B related to a plurality of correction amounts based on the distance between the imaging elements IE and the object. More specifically, the parallax error δD caused by the glass shield SG varies in accordance with the distance to the object in the optical axis direction (z axis direction) of the stereo camera 11. Therefore, the error information may include, as the error information B, a plurality of correction amounts corresponding to the parallax error δD corresponding to a plurality of different distances between the imaging elements IE and the object. Furthermore, the error information may include error information A caused by the glass shield SG at a specific distance obtained by an aiming processing step which will be described later.

The parallax information stored in the parallax information storage unit 14B may include the parallax D illustrated in FIG. 2C. The parallax D can be obtained by subtracting, as a correction amount, the parallax error δD illustrated in FIG. 2B from the difference in image-forming positions at the pixel positions of the pair of imaging elements IE affected by the glass shield SG illustrated in FIG. 2A.

In other words, the differences in image-forming positions of the object between the pixel positions of the pair of imaging elements IE illustrated in FIG. 2A include the parallax error δD caused by the glass shield SG illustrated in FIG. 2B and the parallax D caused by the distance between the pair of imaging elements IE illustrated in FIG. 2C. The parallax D illustrated in FIG. 2C is obtained by subtracting the parallax error δD illustrated in FIG. 2B caused by the glass shield SG from the difference in the image-forming positions illustrated in FIG. 2A, which is the parallax affected by the glass shield SG, and thus the influence by the glass shield SG is reduced.

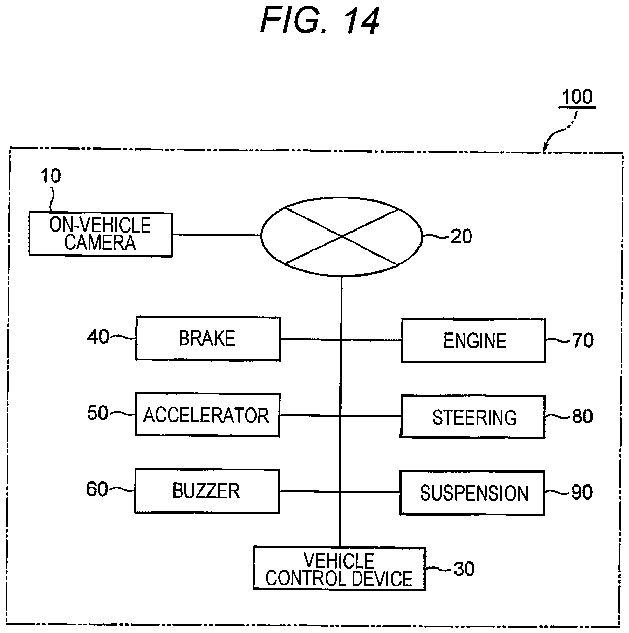

The CAN interface 16 transmits calculation results or other data of the image processing unit 13, the arithmetic processing unit 15, and the control processing unit 17 to the vehicle control device 30 via a CAN 20 of the vehicle (see FIG. 14). More specifically, for example, the distance to the object an error of which caused by the glass shield SG and calculated by the image processing unit 13 has been corrected, the recognition result of the object by the arithmetic processing unit 15, and other data are transmitted via the CAN interface 16 to the vehicle control device 30.

The control processing unit 17 monitors abnormal operation of the image processing unit 13, the arithmetic processing unit 15, and other components, occurrence of an error at the time of data transfer, and other incidents and prevents abnormal operations.

FIG. 3 is a flowchart illustrating an example of processing of the on-vehicle camera 10 illustrated in FIG. 1.

For example when the vehicle is travelling, the on-vehicle camera 10 acquires images photographed by the pair of imaging elements IE of the stereo camera 11 via the image input interface 12 in step S1. In step S2, the acquired images are subjected to image processing by the image processing unit 13, and differences in image-forming positions of the object between the pixel positions of the pair of imaging elements IE are obtained.

At this time, the obtained differences in the image-forming positions can be corrected by the error information A stored in the error information storage unit 14A. The result of the image processing by the image processing unit 13 is used for extraction and recognition of the object by the arithmetic processing unit 15 in step S3. As a result of extraction and recognition of the object by the arithmetic processing unit 15, the position of the object, that is, the position on the images and the position in the horizontal direction along the baseline length and the distance in the optical axis direction in the real space are obtained.

However, the error information A includes correction amounts for correcting an error caused by the glass shield SG at a predetermined short distance obtained in a normal aiming processing step or correcting particularities unique to the imaging elements IE. Therefore, for example, the position or the distance obtained from the images of the object present at a long distance still contains errors caused by the glass shield SG.

Therefore in step S4, correction processing suitable for the object is performed depending on the position in the horizontal direction or the approximate distance of the object by using the error information B stored in the error information storage unit 14A by the image processing unit 13. The error information B includes a plurality of correction amounts corresponding to the parallax error δD corresponding to a plurality of different distances between the imaging elements IE and the object. As a result, the position and the distance obtained from the images of the object present at a long distance can be corrected by using the error information B, and the distance measurement error caused by the glass shield SG can be reduced.

Finally in step S5, the recognition result of the object by the arithmetic processing unit 15 and the corrected distance by the image processing unit 13 are output by the CAN interface 16.

In this manner, the on-vehicle camera 10 of the present embodiment photographs the object outside the vehicle through the glass shield SG of the vehicle. Therefore, the differences in the image-forming positions of the object between the pixel positions of the pair of imaging elements IE include not only the parallax but also errors caused by the shape of the glass shield SG such as undulation. In order to handle this error, as described above, the on-vehicle camera 10 of the present embodiment includes the error information storage unit 14A for storing error information related to errors caused by the glass shield SG for each of the pixel positions.

Therefore, according to the on-vehicle camera 10 of the present embodiment, by using the error information stored in the error information storage unit 14A, the differences in the image-forming positions of the object between pixel positions of the pair of imaging elements IE can be corrected for each of the pixel positions. Therefore, according to the on-vehicle camera 10 of the present embodiment, the measurement error caused by the glass shield SG can be reduced, and measurement and recognition of the distance to the object can be performed more accurately.

The on-vehicle camera 10 according to the present embodiment further includes the parallax information storage unit 14B for storing parallax information related to parallax included in the differences in the image-forming positions of object between the pixel positions of the pair of imaging elements IE. As a result, measurement of the distance to the object or recognition of the object can be performed more accurately on the basis of the parallax information stored in the parallax information storage unit 14B.

In addition, in the on-vehicle camera 10 of the present embodiment, the error information stored in the error information storage unit 14A includes the error information B which is a plurality of correction amounts based on the distance between the imaging elements IE and the object.

As a result, the distance measurement error caused by the glass shield SG which varies depending on the distance to the object can be more accurately corrected.

[Method for Adjusting On-Vehicle Camera]

FIG. 4 is a flowchart illustrating an example of a method for adjusting the on-vehicle camera 10 illustrated in FIG. 1. An adjustment method S100 of an on-vehicle camera according to the present embodiment is an adjustment method of the on-vehicle camera 10 for photographing an object through a glass shield SG of a vehicle as described above, for example. The adjustment method S100 of the on-vehicle camera according to the present embodiment may be performed by using, for example, the stereo camera 11, the image input interface 12, the image processing unit 13, the arithmetic processing unit 15, and the storage unit 14 of the on-vehicle camera 10 illustrated in FIG. 1.

The adjustment method S100 of the on-vehicle camera of the present embodiment may include, for example, an imaging step S10, an error detection step S20, and a correction amount calculating step S30. The imaging step S10 is a step for photographing an object through the glass shield SG by at least one of the imaging elements IE of the stereo camera 11. The error detection step S20 is a step for detecting, for each of the pixel positions, error information related to the error caused by the glass shield SG and included in differences in the image-forming positions of the object between the pixel positions of the pair of imaging elements IE. The correction amount calculating step S30 is a step for calculating a correction amount for obtaining parallax information included in the differences in the image-forming positions of the object using the error information. Each of the steps will be described in more detail below.

(Imaging Step)

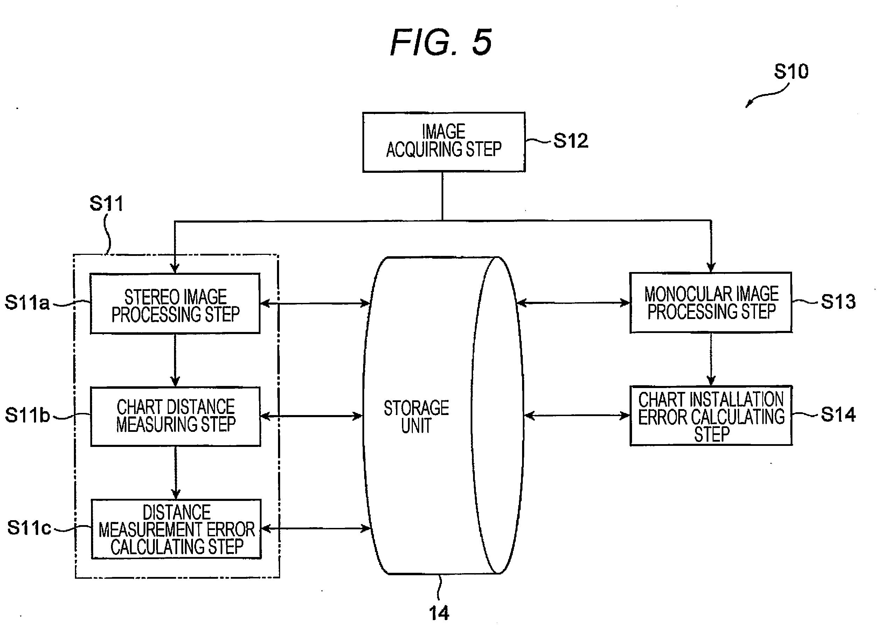

FIG. 5 is a flowchart illustrating details of the imaging step S10 illustrated in FIG. 4. In the related art, an aiming processing step for calculating correction amounts of an optical axis, a distance measurement error, etc. is performed after an on-vehicle camera is mounted in a vehicle in a vehicles factory, for example. In the adjustment method S100 of the on-vehicle camera of the present embodiment, an aiming processing step S11 similar to those of the related art can be included in the imaging step S10. The imaging step S10 includes, for example, an image acquiring step S12, a monocular image processing step S13, a chart installation error calculating step S14, and the aiming processing step S11.

In the image acquiring step S12, first, an object is photographed by the stereo camera 11 through the glass shield SG of the vehicle, and image data is acquired from at least one of the pair of imaging elements IE of the left camera 11L and the right camera 11R by the image input interface 12. In the present embodiment, the imaging step S10 includes the monocular image processing step S13 in which used is one of a pair of images photographed by the pair of imaging elements IE of the left camera 11L and the right camera 11R and a stereo image processing step S11a in which both pieces of image data are used.

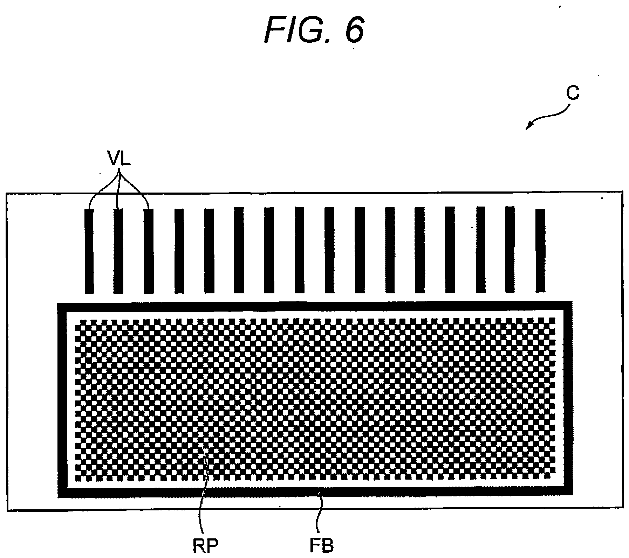

In the image acquiring step S12 of the present embodiment, image data is acquired from the pair of imaging elements IE for use in the stereo image processing step S11a of the aiming processing step S11. However, when the aiming processing step S11 is performed separately from the imaging step S10, image data may be acquired from only one of the pair of imaging elements IE of the stereo camera 11 in the image acquiring step S12. A calibration chart C illustrated in FIG. 6 can be used as the object to be photographed in the image acquiring step S12.

FIG. 6 is a diagram illustrating an example of a pattern of the calibration chart C. The calibration chart C has a planar pattern used for calibration of the stereo camera 11. The pattern of the calibration chart C includes, for example, a vertical stripe pattern consisting of a plurality of equally spaced vertical lines VL and a rectangular frame FB. The pattern of the calibration chart C may further include a random pattern RP consisting of a plurality of points randomly arranged inside the rectangular frame FB. Although not illustrated, the pattern of the calibration chart C may further include a cross pattern for matching with the optical axis of the stereo camera 11.

The plurality of vertical lines VL are arranged at equal intervals in a direction substantially parallel to the baseline length of the stereo camera 11, for example, and are arranged so as to be substantially parallel to the vertical direction. Note that, instead of the vertical lines VL, another pattern arranged at equal intervals may be used. The frame FB is a rectangle a longitudinal direction of which is parallel to the baseline length of the stereo camera 11. The plurality of vertical lines VL extend parallel to the direction of the short sides of the frame FB and are arranged at equal intervals along a long side of the frame FB.

The calibration chart C is arranged at a predetermined distance in the optical axis direction ahead the stereo camera 11 so as to be substantially perpendicular to the optical axis of the stereo camera 11. A distance from the stereo camera 11 to the calibration chart C is, for example, about 3 to 5 m.

In the monocular image processing step S13, image processing is performed using one piece of image data of the pair of images of the pair of imaging elements IE of the left camera 11L and the right camera 11R. Note that in the monocular image processing step S13, it is also possible to perform image processing on each of the image acquired from the imaging element IE of the left camera 11L and the image acquired from the imaging element IE of the right camera 11R. In the monocular image processing step S13, positions of the plurality of vertical lines VL and vertical and horizontal dimensions of the frame FB of the calibration chart C are calculated at several parts on the image.

In the chart installation error calculating step S14, the position of the vertical lines VL and the dimensions of the frame FB of the pattern of the calibration chart C on the image calculated in the monocular image processing step S13 are compared with the actual positions of the vertical lines VL and the vertical and horizontal dimensions of the frame FB of the pattern of the calibration chart C stored in advance in the storage unit 14 or other components. As a result, an installation error of the calibration chart C is calculated.

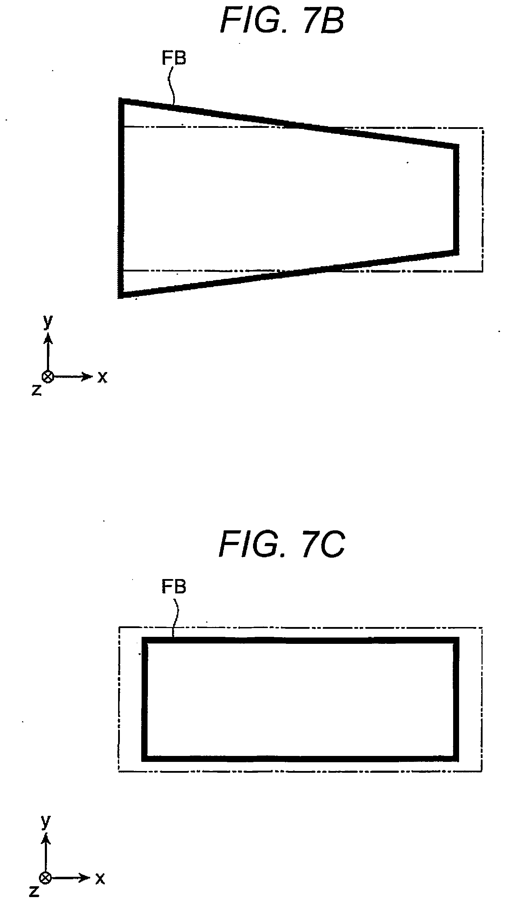

FIG. 7A is a plan view illustrating an example of an installation error of the calibration chart C. FIGS. 7B and 7C are image diagrams illustrating an example of a monocular image of the stereo camera 11 affected by the installation error.

As illustrated in FIG. 7A, the installation error of the calibration chart C is a shift between a reference position C0 where the calibration chart C should be originally placed and a position where the calibration chart C is actually arranged. The installation error includes, for example, an error in the position in the horizontal direction (x axis direction) parallel to the baseline length of the stereo camera 11, an error $\Delta Z$ in the installation distance Z in the optical axis direction (z axis direction) of the stereo camera 11, and an error in the position in the vertical direction (y axis direction) perpendicular to the baseline length and the optical axis direction of the stereo camera 11. In addition, the installation error includes installation errors in the roll angle, the pitch angle, and the yaw angle around x, y, and z axes, respectively.

As illustrated in FIG. 7A, when there is an installation error in the yaw angle θ (flap), as illustrated in FIG. 7B, the pattern of the frame FB of the calibration chart C in the monocular image is distorted from the original rectangle to a trapezoid. In this case, in the monocular image processing step S13, the dimension in the height direction (y axis direction) of the frame FB is calculated at both ends in the longitudinal direction (x axis direction) of the frame FB in the monocular image. More specifically, where on the image a boundary between the black frame FB and the white background portion of the calibration chart C is positioned is calculated. As a result, the dimensions of the frame FB in the monocular image is calculated, and an installation error in the yaw angle θ can be calculated in the chart installation error calculating step S14.

Moreover, in the case where there is no installation error in the yaw angle θ illustrated in FIG. 7A but there is the error $\Delta Z$ in the installation distance Z where the actual installation position is farther than the reference position C0, as illustrated in FIG. 7C, the pattern of the frame FB of the calibration chart C on the monocular image is reduced from the original dimensions. On the other hand, in the case where there is an error in the installation distance Z where the actual installation position is closer than the reference position C0, the pattern of the frame FB of the calibration chart C on the monocular image is enlarged from the original dimensions. In this manner, by calculating the dimensions of the frame FB of the reduced or enlarged monocular image as described above, it is possible to calculate the error in the installation distance in the chart installation error calculating step S14.

Also, in the case where there are both an installation error in the yaw angle θ and an installation error in the installation distance Z, or in the case where there are installation errors in the roll angle and the pitch angle, the installation error can be calculated likewise.

FIG. 8 is a conceptual diagram illustrating the calculation principle of the installation distance Z based on dimensions of the frame FB of the calibration chart C. From the dimension h in the height direction (y axis direction) of an image on an imaging surface of an imaging element IE, a focal distance f of the stereo camera 11, and a dimension H in the height direction of the frame FB of the calibration chart C measured in advance, the installation distance Z of the calibration chart C in the optical axis direction (z axis direction) of the stereo camera 11 is derived by $Z = fH/h$. However, in fact, since there are influences by undulation of the glass shield SG arranged between the stereo camera 11 and the calibration chart C, the error detection step S20 which will be described later is performed.

Next, the aiming processing step S11 included in the imaging step S10 will be described. As illustrated in FIG. 5, the aiming processing step S11 may include the stereo image processing step S11a, a chart distance measuring step S11b, and a distance measurement error calculating step S11c. In the stereo image processing step S11a, images of the calibration chart C photographed through the glass shield SG of the vehicle by the pair of imaging elements IE of the left camera 11L and the right camera 11R of the stereo camera 11 in the image acquiring step S12 are used.

In the stereo image processing step S11a, image processing such as correction for absorbing particularities unique to the imaging elements IE is performed, for example, on each of the pair of pieces of image data of the random pattern RP of the calibration chart C photographed by the pair of imaging elements IE. Furthermore, a parallax image which is information related to the parallax of the stereo camera 11 is calculated from the pair of pieces of image data of the calibration chart C photographed by the pair of imaging elements IE of the stereo camera 11.

That is, in the stereo image processing step S11a, differences in image-forming positions of the pattern of the calibration chart C between pixel positions of the pair of imaging elements IE are obtained as the parallax image. However, the parallax image as the differences in the image-forming positions includes a parallax error caused by the glass shield SG such as refraction.

In the chart distance measuring step S11b, a predetermined part of the stereo images obtained in the stereo image processing step S11a is extracted, and the distance Z to the calibration chart C is calculated from the parallax information such as the parallax image which is a distribution of parallax values. The parallax information including the calculated parallax image and the installation distance Z are stored and stored in the storage unit 14.

In the distance measurement error calculating step S11c, the distance measurement error is calculated by using the installation distance Z of the calibration chart C calculated in the chart distance measuring step S11b and design information such as the actual position and dimensions of the pattern of the calibration chart C input and stored in the storage unit 14 in advance. The calculated distance measurement error is calculated on the basis of the pattern of the calibration chart C arranged at the predetermined distance.

Therefore, at the predetermined distance where the calibration chart C is arranged, it is possible to correct errors caused by the glass shield SG and particularities unique to the imaging elements IE. The calculated distance measurement error can be stored as the error information A in the error information storage unit 14A of the storage unit 14 (see FIGS. 4 and 5). Thus, the imaging step S10 illustrated in FIG. 4 is completed.

In the aiming processing step S11 of the related art, it is assumed that there is no installation error of the calibration chart C and that the distance measurement error is due to the influence of the glass shield SG, and correction amounts for uniformly correcting distance measurement errors for objects at different distances are obtained on the basis of the measurement error of the pattern of the calibration chart C arranged at a predetermined short distance.

Contrarily to this, in the adjustment method S100 of the on-vehicle camera according to the present embodiment, in the imaging step S10 illustrated in FIGS. 4 and 5, the aiming processing step S11 similar to that of the related art is added with the monocular image processing step S13 and the chart installation error calculating step S14. Therefore, for example, it is possible to refer to the calculation results of the installation error of the calibration chart C calculated in the chart installation error calculating step S14 and saved in the storage unit 14 in the chart distance measuring step S11b and to perform correction or other operation on design information such as correction of the installation position of the calibration chart C.

(Error Detection Step)

After completion of the imaging step S10, as illustrated in FIG. 4, the error detection step S20 is performed. The error detection step S20 is a step for detecting, for each of the pixel positions of the imaging elements IE, the error information B related to the error caused by the glass shield SG and included in differences in the image-forming positions of the object between the pixel positions of the pair of imaging elements IE. In the error detection step S20, for example, processing for detecting errors caused by the glass shield SG, such as processing for undulation of the glass shield SG, is performed.

Here, the undulation of the glass shield SG refers to a local distortion of the glass shield SG and may be, for example, streaky unevenness extending from the upper end to the lower end of the glass shield SG or local concavities or protrusions of the glass shield SG. In the imaging step S10 described above, the differences in image-forming positions of the object between the pixel positions of the pair of imaging elements IE of the on-vehicle camera 10 photographing the object through the glass shield SG having such undulation include error information related to errors caused by the glass shield SG.

More specifically, the glass shield SG having such undulation as described above causes light from the object to be refracted, thereby causing a parallax error in the stereo camera 11 and causing a measurement error in the distance.

Therefore, in the error detection step S20, processing for detecting the error such as a parallax error caused by the glass shield SG is performed.

In the error detection step S20, first, the calibration chart C illustrated in FIG. 6 is installed at the predetermined distance from the on-vehicle camera 10 and photographed through the glass shield SG. The installation distance Z of the calibration chart C can be set to, for example, about 5 m. Out of the pattern of the calibration chart C, the vertical stripes pattern (pattern of equal intervals) by the plurality of equally spaced vertical lines VL play an important role in calculation of the parallax error caused by a local distortion of the glass shield SG for each part of different positions in the X axis direction parallel to the baseline length of the stereo camera 11.

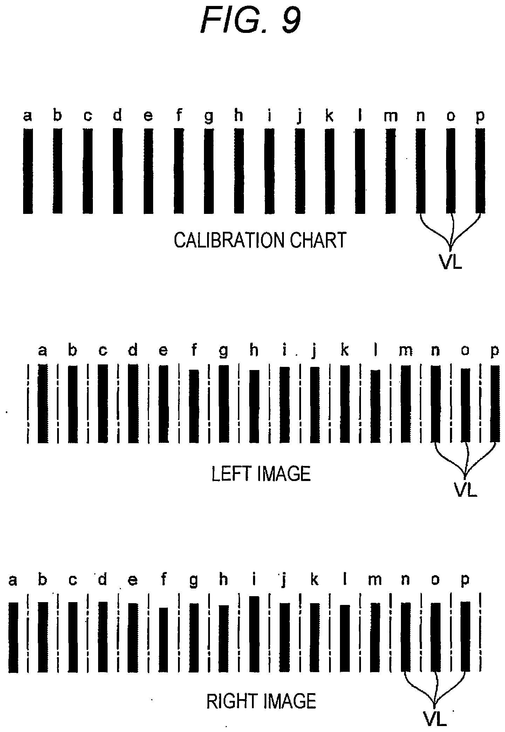

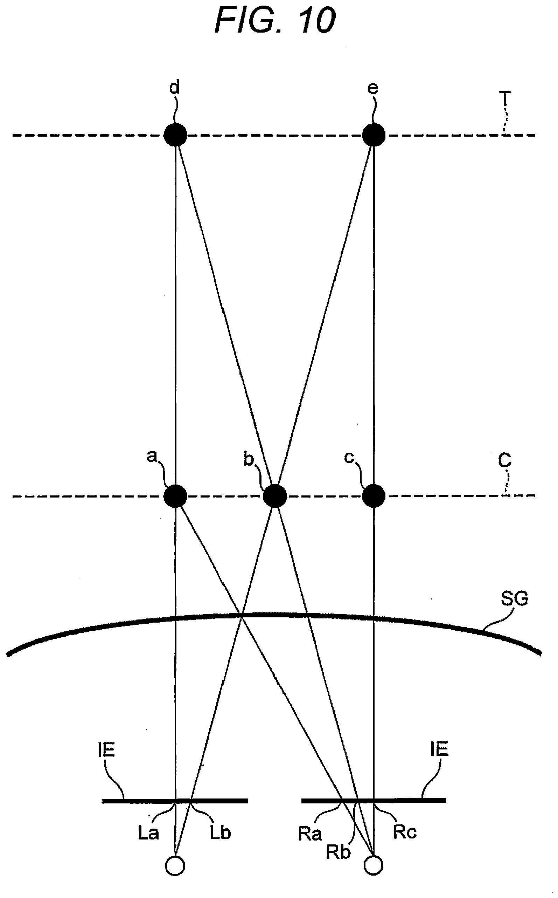

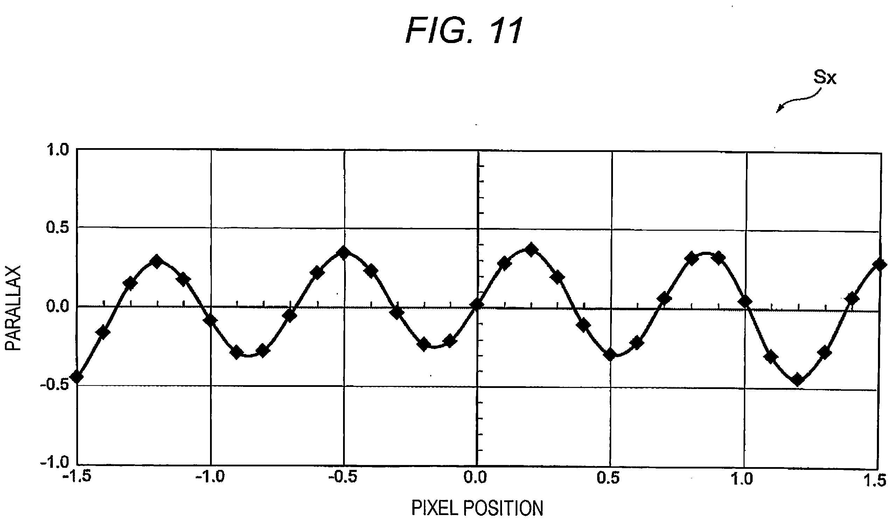

FIG. 9 is a schematic diagram illustrating a left image and a right image as images formed by the pair of imaging elements IE of a stereo camera 11 having photographed the vertical stripes pattern of the calibration chart C. FIG. 10 is a conceptual diagram illustrating the correction principle the distance error caused by undulation of the glass shield SG in the error detection step S20. FIG. 11 is an example of a parallax graph obtained in the error detection step S20.

As illustrated in FIG. 10, in the error detection step S20, the pattern of the calibration chart C arranged at the short distance is photographed through the glass shield SG by the stereo camera 11. Then, as illustrated in FIG. 9, when calculating the parallax between the left image and the right image of the pattern of the calibration chart C obtained by the pair of imaging elements IE, a parallax graph Sx in which the undulation of the glass shield SG is reflected is obtained as illustrated in FIG. 11. At this time, regarding parallax values Sa and Sb of points a and b, respectively, on the calibration chart C illustrated in FIG. 10, the following relational expressions (1) and (2) hold between projection points Ra and Rb of the points a and b on pixel positions on the right imaging element IE and projection points La and Lb, respectively, of the points a and b on pixel positions on the left imaging element IE.

$$Sa = La - Ra \quad (1)$$

$$Sb = Lb - Rb \quad (2)$$

Moreover, for example a parallax value Sd of a point d at a long distance 50 m ahead can be calculated from the points a and b on the calibration chart C at the short distance of 5 m ahead, for example. More specifically, the parallax value Sd (distance) of the point d at the long distance can be calculated from the projection point La on the left imaging element IE of the point a located at the short distance and the projection point Rb on the right imaging element IE of the point b located at the short distance.

In addition to the parallax graph Sx, the projection point La on the left imaging element IE and the projection point Rb on the right imaging element IE can be derived by another calculation means. In this manner, when the projection point La on the left imaging element IE and the projection point Rb on the right imaging element IE are obtained, the parallax value Sd at the point d at the long distance illustrated in FIG. 10 can be obtained by the following equation (3) using the projection point La, the projection point Rb, and the above equation (1).

$$Sd = La - Rb = Sa + Ra - Rb \quad (3)$$

Furthermore, a parallax value Se of a point e at the long distance illustrated in FIG. 10 can be obtained by the following equation (4) using a projection point Lb on the left imaging element IE of the point b on the calibration chart C at the short distance, a projection point Rc on the right imaging element IE of a point c on the calibration chart C at the short distance, and the above equation (2).

$$Se = Lb - Rc = Sb + Rb - Rc \quad (4)$$

An interval between the point a and the point b at the short distance and an interval between the point b and the point c illustrated in FIG. 10 can be calculated by the following expression (5) depending on the distance to the object T at the long distance. Therefore, parallax conversion according to the distance or the size of the object T is enabled.

$$\text{(Baseline length)} - \text{(baseline length)} \times (\text{installation distance of calibration chart C/distance to object T}) \quad (5)$$

The above calculation is for a case assuming that there is no error in the installation position of the calibration chart C.

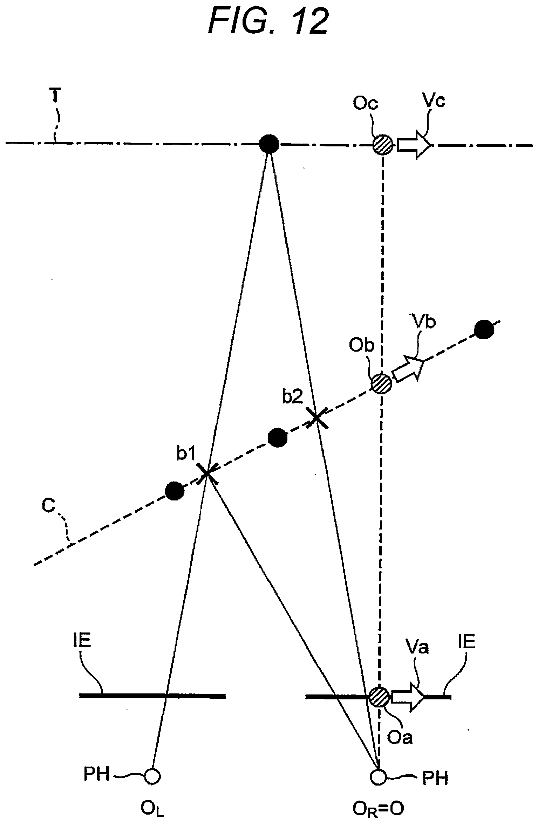

Next, a method of obtaining a parallax error considering the installation error of the calibration chart C will be described. FIG. 12 is a conceptual diagram illustrating the correction principle in consideration of the installation error of the calibration chart C.

In FIG. 12, Oa represents the position of the optical axis on the imaging element IE or a vertical line VL of the pattern of the calibration chart C that serves as a reference. Va represents a vector indicating an inclination of the imaging surface of the imaging element IE. Ob represents a point on the optical axis on the calibration chart C or the position of the vertical line VL of the pattern of the calibration chart C that serves as a reference. Vb represents a vector indicating an inclination of the calibration chart C. Oc represents a reference point (a point overlaps with Oa and Ob in the optical axis direction) of the lateral position of the distant object T. Vc represents a vector indicating a measurement surface of the distant object T. Here, Va, Vb, and Vc are unit vectors each having a length of 1. Furthermore, it is assumed that a point Pb on the calibration chart C and a point Pa on the imaging element IE satisfy the following equations (6) and (7), respectively.

$$Pb = Ob + kb \times Vb \quad (6)$$

$$Pa = Oa + ka \times Va \quad (7)$$

In this case, the correction amount of distance can be calculated by the following procedures. That is, the respective following procedures can be included in the correction amount calculating step S30 for calculating the correction amount for obtaining the parallax information included in differences in the image-forming positions of the object using the error information.

(Correction Amount Calculating Step)

1) Extraction of imaging positions of vertical lines

First, positions of the vertical lines VL of the calibration chart C are measured on each of the right image and the left image photographed by the pair of imaging elements IE of the stereo camera 11 as illustrated in FIG. 9. At this time, a vertical line VL on the calibration chart C on in front of the left imaging element IE illustrated in FIG. 12 is taken as a reference vertical line VL. Let the position of the reference vertical line VL be $L_0$, and positions of a plurality of vertical lines VL arranged at equal intervals on the left side of the reference vertical line VL be $L_{-1}$, $L_{-2}$, $L_{-3}$,...., which are sequentially shifted leftward from the reference vertical line VL. Moreover, let positions of a plurality of vertical lines VL arranged at equal intervals on the right side of the reference vertical line VL be $L_{+1}$, $L_{+2}$, $L_{+3}$, , which are sequentially shifted rightward from the reference vertical line VL.

Furthermore, a vertical line VL on the calibration chart C on in front of the right imaging element IE is taken as a reference vertical line VL. Let the position of the reference vertical line VL be $R_0$, and positions of a plurality of vertical lines VL arranged at equal intervals on the left side of the reference vertical line VL be $R_{-1}$, $R_{-2}$, $R_{-3}$,...., which are sequentially shifted leftward from the reference vertical line VL. Moreover, let positions of a plurality of vertical lines VL arranged at equal intervals on the right side of the reference vertical line VL be $R_{+1}$, $R_{+2}$, $R_{+3}$, , which are sequentially shifted rightward from the reference vertical line VL.

Then, by the pattern matching, the positions of the vertical lines VL of the right image and the left image are calculated for sub pixels. As a result, as illustrated in the following expression (8), a plurality of pairs of a position [pix] of a vertical line VL on the left image and a position [pix] of the vertical line VL on the right image are obtained.

[Expression 1]

$$..., (R_{-1}, L_{-1}), (R_0, L_0), (R_{+1}, L_{+1}), ... \quad (8)$$

Furthermore, $K_{bx}$ is known as a design value of a position of a vertical line VL on the calibration chart C, and a position of a vertical line VL on the right image corresponding to the position of each of the vertical lines VL on the calibration chart C is denoted by $K_{ax}$. A plurality of pairs of positions as illustrated below can be obtained.

[Expression 2]

$$\ldots, \ (k_{b, \ -1}, \ k_{a, \ -1}), \ (k_{b, \ 0}, \ k_{a, \ 0}), \ (k_{b, \ +1}, \ k_{a, \ +1}), \ \ldots$$

$$(9)$$

Likewise, the following relationships are obtained.

[Expression 3]

$$\ldots, \ (k_{b, \ -1}, \ R_{-1}), \ (k_{b, \ 0}, \ R_0), \ (k_{b, \ +1}, \ R_{+1}), \ \ldots \quad (10)$$

[Expression 4]

$$\ldots, \ (k_{b, \ -1}, \ L_{-1}), \ (k_{b, \ 0}, \ L_0), \ (k_{b, \ +1}, \ L_{+1}), \ \ldots \quad (11)$$

Particularly important among these relational expressions are the relational expressions (9) to (11) expressing relationships between the design value $K_b$ of the position of a vertical line VL on the calibration chart C and various measurement values.

2) Calculation of matrix parameter

Let this point be a reference point (0th) of $K_b$, and it is assumed that a vertical line VL of b adjacent thereto on its right is projected at a position of a on the right screen. Let this be $(K_{b1}, K_{a1})$. Such a pair of values is obtained as many as the number of the vertical lines VL as illustrated in the following expression (12).

[Expression 5]

$$\ldots, \ (k_{b, \ -1}, \ k_{a, \ -1}), \ (k_{b, \ 0}, \ k_{a, \ 0}), \ (k_{b, \ +1}, \ k_{a, \ +1}), \ \ldots$$

$$(12)$$

Here, the following equation (13) can be expanded as in the following equation (14).

[Equation 6]

$$k_a = \frac{\beta_3 + \beta_4 k_b}{\beta_1 + \beta_2 k_b} \qquad (13)$$

[Expression 7]

$$\beta_1 k_a + \beta_2 k_a k_b - \beta_3 - \beta_4 k_b = 0 \quad (14)$$

It is required that this holds for any pair of Kb and Ka ($K_{b,x}$, $K_{a,x}$). That is, the solution is linear with respect to $\beta_1$ to $\beta_4$ to be obtained. Therefore, using the following data (15) as an input, the following expression (16) is solved by the least squares method to derive $\beta_1$ to $\beta_4$.

[Expression 8]

$$\ldots, \ (k_{b-1}, \ k_{a-1}), \ (k_{b0}, \ k_{a0}), \ (k_{b1}, \ k_{a1}), \ \ldots \quad (15)$$

[Expression 9]

$$\beta_1 k_a + \beta_2 k_a k_b - \beta_3 - \beta_4 k_b \quad (16)$$

Therefore, the problem is expressed by the following expression (17).

[Expression 10]

$$\underset{\beta_1, \cdots, \beta_4}{\arg\min} \ \sum_{(k_a, k_b)} \left\{ \beta_1 k_a + \beta_2 k_a k_b - \beta_3 - \beta_4 k_b \right\}^2 \quad (17)$$

However, the above expression (17) has indefinite solutions for $\beta_1$ to $\beta_4$. That is, when there is a solution, a constant multiple thereof is also a solution. Therefore, it is necessary to determine one of values of $\beta_1$ to $\beta_4$ by using another means.

Note that $\beta_3 = 0$ is derived from the above expression (17). Plotting $k_a$, $k_a k_b$, and $-k_b$, which are coefficients of the remaining $\beta_1$, $\beta_2$, and $\beta_4$, in a three-dimensional space, a solution ($\beta_1$, $\beta_2$, $\beta_4$) means a vector orthogonal to a plane including the plotted points ($k_a$, $k_a k_b$, $-k_b$). It is understood that a group of these plotted points ($k_a$, $k_a k_b$, $-k_b$) forms a parabolic curve and that a subspace formed by the group is a plane.

3) Calculation of Installation Position of Chart

From the above, values of $\beta_1$ to $\beta_4$ are derived. Furthermore, in the case where it is assumed that the values of $\beta_1$ to $\beta_4$ are included in a matrix, a relational expression as in the following equation (18) holds for a relationship of points on the calibration chart C of FIG. 10.

[Equation 11]

$$\begin{pmatrix} \beta_1 & \beta_2 \\ \beta_3 & \beta_4 \end{pmatrix} \equiv \left( \mathbf{O}_a, \mathbf{V}_a \right)^{-1} \cdot \left( \mathbf{O}_b, \mathbf{V}_b \right) = \begin{vmatrix} z_b & \dfrac{-\mathbf{V}_a \times \mathbf{V}_b}{\mathbf{O}_a \times \mathbf{V}_a} \\ 0 & \dfrac{\mathbf{O}_a \times \mathbf{V}_b}{} \end{vmatrix} \quad (18)$$

As described above, $\beta_1$ to $\beta_4$ can be obtained as indefinite solutions from the position of the vertical lines VL obtained in the monocular image processing. That is, given a solution of $\beta_1$ to $\beta_4$, a constant multiple thereof, which is $(\beta_1, \beta_2, \beta_3, \beta_4) = c \cdot (\beta_1, \beta_2, \beta_3, \beta_4)$, also is a solution.

Here, from the above relational expression (18), it is understood that $\beta_1$ represents an amount representing an installation position of the calibration chart C, more precisely, a value obtained by dividing the installation distance Z of the calibration chart C by the focal distance f, and that $\beta_4$ is an amount representing an installation angle of the calibration chart C. Therefore, if either the installation distance Z or the installation angle of the calibration chart C is derived by another means, the other can be derived therefrom.

The installation error of the calibration chart C is calculated in the monocular image processing step S13 and the chart installation error calculating step S14 included in the imaging step S10 as described above and is stored in the storage unit 14. Therefore, if $\sin\theta$ is derived by using an installation error in the yaw angle $\theta$ of the calibration chart C stored in the storage unit 14, this is an approximate value of $\beta_4$. As a result, the installation position $\beta_1$ of the calibration chart C can be derived.

Note that the error $\Delta Z$ in the installation distance Z of the calibration chart C calculated in the monocular image processing step S13 and the chart installation error calculating step S14 included in the imaging step S10 described above may be affected by the glass shield SG. Specifically, since the glass shield SG of an automobile is curved with a constant curvature also in the vertical direction, images photographed by the pair of imaging elements IE of the stereo camera 11 may be enlarged or reduced with respect to the true value due to a lens effect of the glass shield SG.

In order to suppress the influence of the glass shield SG in the monocular image processing step S13 and the chart installation error calculating step S14 described above, it is preferable to use an angle. This is because using an angle allows an accurate distance to be obtained from an expansion of the $\beta$ matrix. That is, the $\beta$ matrix is obtained from the pattern of the vertical lines VL of the calibration chart C, and the parameter of $\beta_4$ out of the $\beta$ matrix represents an inclination of the calibration chart C, and thus on the basis of this an installation error of the calibration chart C can be inversely calculated from $\beta_1$. This is effective for canceling the lens effect of the glass shield SG in the vertical direction. On the other hand, when the influence of the curvature of the glass shield SG is small, as illustrated in FIG. 8, the installation distance Z may be derived from Z = fH/h.

Hereinafter, the relationship between the $\beta$ matrix and the installation position of the calibration chart C will be described in more detail.

First, as illustrated in FIG. 12, when it is assumed that an ideal pinhole PH in the right imaging element IE is the right pinhole origin $O_R$, $\beta_3$ is permanently 0, and $\beta_1$ is a ratio between the distance to the point $O_b$ on the calibration chart C, that is, the distance from the right pinhole origin $O_R$ to the point $O_b$ and the distance to the point $O_a$ on the imaginary imaging surface of the right imaging element IE. These solutions hold as long as the point $O_a$ is on a straight line connecting the point $O_b$ and the right pinhole origin $O_R$. Moreover, from the nature of the outer product in the plain geometry, the following equation (19) can be derived.

[Equation 12]

$$\beta_4 = \frac{\mathbf{O}_a \times \mathbf{V}_b}{\mathbf{O}_a \times \mathbf{V}_a} = \frac{\sin\theta_{\gamma b}}{\sin\theta_{\gamma a}} \qquad (19)$$

In order to derive the above equation (19), the fact that the vectors Va and Vb are unit vectors is utilized. If $\sin\theta_{va}$ is 1 ($O_a$ and $V_a$ are orthogonal to each other), $\beta_4$ represents a sine angle with respect to the camera optical axis (straight line connecting the right pinhole origin $O_R$ and the point $O_b$).

4) Calculation of undulation effect of glass 1 As described above, the error detection step S20 is a step for detecting, for each of the pixel positions of the imaging elements IE, the error information related to the error caused by the glass shield SG and included in differences in the image-forming positions of the object between the pixel positions of the pair of imaging elements IE. Here, processing for undulation of the glass shield SG, which is processing for detecting the error caused by the glass shield SG performed in the error detection step S20, will be described.

First, an effect of the undulation of the glass shield SG is calculated. In this calculation processing, a relationship between a distant light spot and a light spot on the calibration chart C is determined by a theory, that is, a pinhole model which is not subjected to distortion of the glass. Then, relationships between a light spot on the calibration chart C and the projection planes of the imaging elements IE are considered from the actual observation values, that is, displacements of positions of the vertical lines VL of the calibration chart C affected by the distortion of the glass shield SG to calculate the parallax distortion attributable to the distant light spot. Specifically, the calculation processing of the effect of the undulation of the glass includes the following processing.

First, relational expressions of $k_{b1}$ and $k_{b2}$ on the chart, which are $k_{b1} = f1(k_{b2})$ and $k_{b2} = f2(k_{b1})$, are derived with respect to the distant light spot kc. These relational expressions are derived on the basis of the β matrix described above. Next, positions at which the point $k_b$ on the chart is projected on the imaging surface of the left imaging element IE and the imaging surface of the right imaging element IE are obtained as a graph of $L(k_b)$ and $R(k_b)$ from the analysis of the position of the vertical lines VL of the calibration chart C. Next, the amount of shift in parallax of the distant light spot $k_c$ is derived from an equation of parallax = $L(k_{b1})$ - $R(k_{b2})$ with respect to intersections $k_{b1}$ and $k_{b2}$ on the calibration chart C of the light spot.

5) Calculation of undulation effect of glass 2 In this manner, for example in the case where there is a light spot c at a long distance of 35 m ahead, relational expressions of left/right-converted projection points on the right image photographed by the right imaging element IE of the stereo camera 11 can be obtained as: a2 = a2(c); and a1 = a1(c). By analyzing the spots at equal intervals on the calibration chart C at a short distance of, for example, 3.5 m ahead, that is, by analyzing the plurality of vertical lines VL arranged at equal intervals, specific values of the β matrix representing the relative positional relationship between the stereo camera 11 and the calibration chart C can be obtained as illustrated in the expression (20) below.

[Expression 13]

$$\begin{pmatrix} \beta_1 & \beta_2 \\ \beta_3 & \beta_4 \end{pmatrix} \qquad (20)$$

At this time, a projection point b2 on the imaging element IE on the right of the light spot c is expressed as $P_{b2}$ = $O_b$ + $k_{b2} \times V_b$, and this coefficient $k_{b2}$ can be derived by $k_{b2}$ = Function 1($k_c$). Similarly, a projection point b1 on the imaging element IE on the left of the light spot c is expressed as $P_{b1}$ = $O_b$ + $k_{b1} \times V_b$, and this coefficient $k_{b1}$ can be derived by $k_{b1}$ = Function 2(kc). Furthermore, the projection point b2 and the projection point a2(= $O_a$ + $k_{a2} \times V_a$) on the imaging surface are in a relationship represented as: $k_{a2}$ = Function 3($k_{b2}$).

Similarly, the relationship between the projection point b1 and the projection point a1(= $O_a$ + $k_{a1} \times V_a$) on the imaging surface is represent as: $k_{a1}$ = Function 4($k_{b1}$). Therefore, for example in the case where the light spot c is at a long distance of 35 m ahead, relational expressions of the left/right-converted projection points of a2 = a2(c) and a1 = a1(c) on the right image can be obtained as: $k_{a2}$ = Function 3(Function 1(kc)); and $k_{a1}$ = Function 4(Function 2(kc)) .

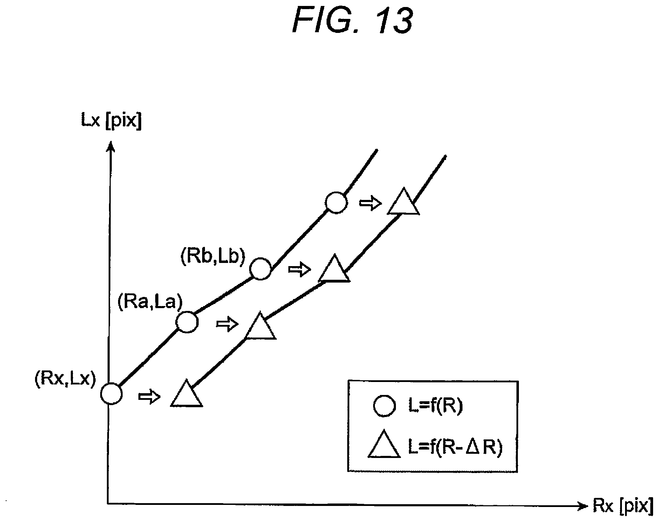

FIG. 13 is a graph illustrating an example of the correction amount of distance based on the above calculation processing of undulation of the glass shield SG. A graph plotted with white dots (circles) represents left and right components at a short distance of 3.5 m ahead, for example, and a graph plotted with white triangles (triangular marks) represents left and right components at a long distance of 35 m ahead, for example, which are estimated from the left and right components at the short distance.

In this manner, by analyzing the vertical lines VL at equal intervals on the calibration chart C at the short distance of 3.5 m ahead, for example, specific values of the β matrix representing the relative positional relationship between the stereo camera 11 and the calibration chart C can be obtained. As a result, as illustrated in FIG. 13, a relational expression between R and ΔR can be obtained expressly. That is, by analyzing the vertical lines VL at equal intervals on the calibration chart C at a short distance, the correction amount for obtaining the parallax information included in differences in the image-forming positions of an object can be calculated by using the error information.

As described above, the adjustment method S100 of the on-vehicle camera according to the present embodiment is a method of photographing an object through the glass shield SG of the vehicle and adjusting the on-vehicle camera 10 and, as described above, includes the imaging step S10, the error detection step S20, and the correction amount calculating step S30. As a result, in the imaging step S10, the object can be photographed through the glass shield SG by the imaging elements IE. Moreover in the error detection step S20, error information related to the error caused by the glass shield SG and included in differences in the image-forming positions of the object between the pixel positions of the pair of imaging elements IE can be detected for each of the pixel positions. Then, by using the error information obtained in the error detection stepS20, the correction amount for obtaining the parallax information included in the differences in the image-forming positions of the object can be calculated.

Therefore, according to the adjustment method S100 of the on-vehicle camera of the present embodiment, it is not necessary to remove the glass shield SG unlike adjustment methods of an on-vehicle camera in the related art. In addition, the distance measurement error caused by the glass shield SG can be reduced without using another distance measurement device.

In addition, in the adjustment method S100 of the on-vehicle camera of the present embodiment, as described above the calibration chart C is photographed by the pair of imaging elements IE through the glass shield SG in the imaging step S10 for photographing the object, and the error information is obtained using the pattern of the calibration chart C and image-forming positions of the pattern at the pixel positions of the pair of imaging elements IE. That is, it is possible to calculate the correction amount for the distance to an object at a long distance by using the calibration chart C arranged at a short distance, without photographing the object at the long distance, and to reduce the distance measurement error. Therefore, the adjustment method S100 of the on-vehicle camera according to the present embodiment can be performed not only in a vehicles factory but also in a limited space such as a car dealer.

Furthermore, in the adjustment method S100 of the on-vehicle camera according to the present embodiment, the pattern of the calibration chart C includes the plurality of vertical lines VL arranged at equal intervals. As a result, as described above, it is possible to calculate the correction amount for the distance to an object at a long distance by using the calibration chart C arranged at a short distance and to reduce the distance measurement error.

In addition, in the adjustment method S100 of the on-vehicle camera according to the present embodiment, the pattern of the calibration chart C includes the rectangular frame FB. As a result, as described above, the installation error of the calibration chart C can be easily and accurately calculated.

[On-Vehicle Camera System]

FIG. 14 is a block diagram illustrating a schematic configuration of an on-vehicle camera system 100 according to an embodiment of the present invention. The on-vehicle camera system 100 of the present embodiment is, for example, a system mounted on a vehicle, and includes the on-vehicle camera 10 described above and the vehicle control device 30. The vehicle control device 30 controls a brake 40, an accelerator 50, an alarm device 60 such as a buzzer, an engine 70, a steering 80, a suspension 90, or other components of the vehicle on the basis of a calculation result of the distance or the speed of an object and a recognition result of an object by the on-vehicle camera 10.

The on-vehicle camera system 100 of the present embodiment includes the on-vehicle camera 10 described above. Therefore, the on-vehicle camera 10 can reduce the measurement error caused by the glass shield SG and measure and recognize the distance to an object more accurately, thereby improving the accuracy or reliability of control by the vehicle control device 30.

Although the embodiments of the present invention have been described in detail with reference to the drawings, the specific configuration is not limited to these embodiments, and any design change or the like within the scope not deviating from the gist of the present invention are also to be included in the present invention. Reference Signs List

  10 on-vehicle camera
  14A error information storage unit
  14B parallax information storage unit
  100 on-vehicle camera system
  C calibration chart
  FB frame (pattern)
  IE imaging element
  S10 imaging step (step of photographing an object)
  S20 error detection step (step of detecting error information for each pixel position)
  S30 correction amount calculating step (step of calculating correction amount)
  S100 method for adjusting on-vehicle camera
  SG glass shield
  T object
  VL vertical line (pattern)

**Claims**

**1.** An on-vehicle camera for photographing an object outside a vehicle through a glass shield of the vehicle, the on-vehicle camera comprising:

  - a pair of imaging elements; and
  - an error information storage unit (14A),
  wherein the error information storage unit (14) stores error information related to an error caused by the glass shield (SG), the error included in a difference in image-forming positions of the object (T) between pixel positions of the pair of imaging elements (IE) for each of the pixel positions
  **characterized in that**
  the error information includes a plurality of correction amounts based on a distance between the imaging elements

(IE) and the object (T).

2. The on-vehicle camera according to claim 1, further comprising a parallax information storage unit (14B) for storing parallax information related to parallax of the pair of imaging elements (IE), the parallax included in the difference in the image-forming positions.

3. An on-vehicle camera system comprising the on-vehicle camera according to any one of claims 1 to 2.

**Patentansprüche**

1. Fahrzeuginterne Kamera zum Fotografieren eines Gegenstands außerhalb eines Fahrzeugs durch eine Glasscheibe des Fahrzeugs, wobei die fahrzeuginterne Kamera Folgendes umfasst:

   - ein Paar von Bildgebungselementen und
   - eine Fehlerinformationsspeichereinheit (14A),
   wobei die Fehlerinformationsspeichereinheit (14A) Fehlerinformationen in Bezug auf einen Fehler, der durch die Glasscheibe (SG) verursacht wird, speichert, wobei der Fehler in einer Differenz von Bilderzeugungspositionen des Gegenstands (T) zwischen Pixelpositionen des Paars von Bildgebungselementen (IE) für jede der Pixelpositionen enthalten ist,
   **dadurch gekennzeichnet, dass**
   die Fehlerinformationen mehrere Korrekturbeträge auf der Grundlage einer Entfernung zwischen den Bildgebungselementen (IE) und dem Gegenstand (T) enthalten.

2. Fahrzeuginterne Kamera nach Anspruch 1, die ferner eine Parallaxeninformationsspeichereinheit (14B) zum Speichern von Parallaxeninformationen in Bezug auf eine Parallaxe des Paars von Bildgebungselementen (IE) umfasst, wobei die Parallaxe in der Differenz der Bilderzeugungspositionen enthalten ist.

3. Fahrzeuginternes Kamerasystem, das die fahrzeuginterne Kamera nach einem der Ansprüche 1 bis 2 umfasst.

**Revendications**

1. Caméra montée sur véhicule destinée à photographier un objet extérieur à un véhicule à travers un écran en verre du véhicule, la caméra montée sur véhicule comprenant :

   - une paire d'éléments d'imagerie ; et
   - une unité de stockage d'information d'erreur (14A),
   dans laquelle l'unité de stockage d'information d'erreur (14A) stocke une information d'erreur en lien avec une erreur causée par l'écran en verre (SG), l'erreur incluant une différence dans des positions de formation d'image de l'objet (T) entre des positions de pixels de la paire d'éléments d'imagerie (IE) pour chacune des positions de pixels,
   **caractérisée en ce que**
   l'information d'erreur inclut une pluralité de valeurs de correction sur la base d'une distance entre les éléments d'imagerie (IE) et l'objet (T).

2. Caméra montée sur véhicule selon la revendication 1, comprenant en outre une unité de stockage d'information de parallaxe (14B) destinée à stocker une information de parallaxe en lien avec une parallaxe de la paire d'éléments d'imagerie (IE), la parallaxe étant incluse dans la différence dans les positions de formation d'image.

3. Système de caméra monté sur véhicule comprenant la caméra montée sur véhicule selon l'une quelconque des revendications 1 à 2.

*FIG. 1*

EP 3 505 865 B1

## FIG. 2A

DIFFERENCE IN
IMAGE-FORMING POSITIONS

PIXEL POSITION

## FIG. 2B

PARALLAX ERROR $\delta$D

PIXEL POSITION

## FIG. 2C

PARALLAX D

PIXEL POSITION

## FIG. 3

START

S1 — ACQUIRE IMAGE

S2 — IMAGE PROCESSING ← ERROR INFORMATION A

S3 — EXTRACT AND RECOGNIZE OBJECT

S4 — CORRECTION PROCESSING ← ERROR INFORMATION B

S5 — OUTPUT

END

# FIG. 4

S100

```
                                   ┌─────────────┐
                                   │    START    │
                                   └─────────────┘
                                          │
                                          ▼
        ┌──────────────────┐     ┌─────────────────────┐
        │       14A    14  │◄───►│    IMAGING STEP     │~S10
        │  ┌─────────────┐ │     └─────────────────────┘
        │  │    ERROR    │ │                │
        │  │ INFORMATION │ │                ▼
        │  │STORAGE UNIT │ │◄───►┌─────────────────────┐
        │  └─────────────┘ │     │       ERROR         │~S20
        │                  │     │  DETECTION STEP     │
        │  ┌─────────────┐ │     └─────────────────────┘
        │  │  PARALLAX   │ │                │
        │  │ INFORMATION │ │◄───►           ▼
        │  │STORAGE UNIT │ │     ┌─────────────────────┐
        │  └─────────────┘ │     │ CORRECTION AMOUNT   │~S30
        │       14B        │     │ CALCULATING STEP    │
        └──────────────────┘     └─────────────────────┘
                                          │
                                          ▼
                                   ┌─────────────┐
                                   │     END     │
                                   └─────────────┘
```

EP 3 505 865 B1

## FIG. 5

# FIG. 6

# FIG. 7A

## FIG. 7B

FB

y
z ⊗ → x

## FIG. 7C

FB

y
z ⊗ → x

FIG. 8

EP 3 505 865 B1

# FIG. 9

a b c d e f g h i j k l m n o p

CALIBRATION CHART

VL

a b c d e f g h i j k l m n o p

LEFT IMAGE

VL

a b c d e f g h i j k l m n o p

RIGHT IMAGE

VL

# FIG. 10

# FIG. 11

## FIG. 12

# FIG. 13

# FIG. 14

**EP 3 505 865 B1**

**REFERENCES CITED IN THE DESCRIPTION**

**Patent documents cited in the description**

- JP 2015169583 A
- JP 2016006406 A
- EP 2902967 A1